# FASCICULE DE BREVET EUROPEEN

(11) **EP 1 933 244 B1**
(45) Date de publication et mention de la délivrance du brevet: **05.08.2009**
(21) Numéro de dépôt: 07291455.9
(22) Date de dépôt: 05.12.2007
(51) Int. Cl.: G06F 17/30, H04L 12/28, H04L 29/06

(54) **Baladodiffusion sur téléphone mobile**
Podcasting auf Mobiltelefon
Podcast on a mobile telephone

(30) Priorité: 13.12.2006 FR 0655474
(43) Date de publication de la demande: 18.06.2008
(73) Titulaire: Bouygues Telecom, 92100 Boulogne Billancourt (FR)
(72) Inventeur: Bernard, Samuel, 75014 Paris (FR)
(74) Mandataire: Novagraaf IP

(56) Documents cités:
- KR-B1- 100 573 037
- A. BLEKAS,J. GAROFALAKIS, V. STEFANIS: "Use of RSS feeds for Content Adaptation in Mobile Web Browsing" 23 mai 2006 (2006-05-23), pages 1-7, XP002443672 Edinburgh UK Extrait de l'Internet: URL:http://www.w4a.info/2006/prog/11-bleka s.pdf> [extrait le 2007-07-20]
- ATTARDI G ET AL: "The LOA Customizable Media Aggregator" AUTOMATED PRODUCTION OF CROSS MEDIA CONTENT FOR MULTI-CHANNEL DISTRIBUTION, 2005. AXMEDIS 2005. FIRST INTERNATIONAL CONFERENCE ON FLORENCE, ITALY 30-02 NOV. 2005, PISCATAWAY, NJ, USA,IEEE, 30 novembre 2005 (2005-11-30), pages 115-122, XP010892440 ISBN: 0-7695-2348-X

## Description

L'invention concerne le domaine de la téléphonie mobile et, plus particulièrement, l'accès à des contenus de type balado (*podcast* en anglais) par les téléphones mobiles.

L'invention se rapporte à un procédé et à un système associé de téléchargement sur un terminal mobile d'un contenu numérique mis à jour épisodiquement (balado) et renseigné dans un premier flux de données (fil RSS - *Really Simple Syndication)* comprenant des indications de mise à jour dudit contenu numérique, ledit premier flux de données étant généré à une première adresse numérique par au moins un serveur informatique d'un réseau informatique, le procédé comprenant les étapes suivantes :
- un dispositif informatique vérifie, via ledit réseau informatique, les indications de mise à jour générées à ladite première adresse numérique,
- ledit dispositif informatique télécharge ledit contenu numérique renseigné dans ledit premier flux de données en cas de mise à jour, ledit contenu numérique téléchargé étant stocké sur le dispositif informatique.

Un balado *(podcast)* est un fichier numérique, généralement au contenu multimédia (son, vidéo, ...), qui par l'entremise d'un abonnement à un fil RSS ou équivalent, auquel il est rattaché, peut être téléchargé automatiquement à l'aide d'un logiciel agrégateur et destiné à être écouté ou visionné ultérieurement sur un équipement mobile, type baladeur numérique.
Le fil RSS est une technologie, généralement mais non exclusivement, basée sur le format XML *(Extensible Markup Language)* par laquelle un site Web transmet, sur requête de l'agrégateur, la liste des modifications récentes du site, et notamment celles d'un fichier balado auquel le fil est rattaché. Techniquement, un fil RSS est un document XML rendu accessible par un site Web à une adresse URL *(Uniform Resource Locator)* associée, ce document incluant l'ensemble des modifications effectuées et l'adresse URL à laquelle le balado est disponible au téléchargement.
L'intérêt majeur de ces fils RSS est d'avoir connaissance des changements d'un site Web, et donc d'un fichier à télécharger, sans avoir besoin d'accéder à celui-ci pour vérifier l'ensemble du contenu.
La mise en pratique de cette technologie requiert au poste de l'utilisateur de disposer d'un agrégateur. Un agrégateur est une application logicielle qui permet de suivre plusieurs fils de syndication en même temps, tels que RSS ou Atom et d'avertir, par conséquent, l'utilisateur d'un contenu mis à jour sur un site Web. En pratique, suite à l'abonnement (inscription) de l'utilisateur à des fils RSS (ceux des sites auxquels l'utilisateur s'intéresse), l'agrégateur vérifie périodiquement l'état de ces fils RSS et indique, le cas échéant, à l'utilisateur une éventuelle mise à jour. L'agrégateur permet alors le téléchargement automatique d'un fichier mis à jour qui est rattaché au fil RSS mis à jour.

La genèse et les développements de cette technologie restent cantonnés au domaine informatique et aux sites Web. L'accès à de tels contenus n'est principalement possible que par le réseau Internet.

Un objectif de l'invention est de permettre la récupération de fichiers balados sur le terminal mobile d'un usager par la voie des réseaux de communication.
Depuis que la téléphonie mobile offre des solutions d'accès direct au réseau Internet et aux sites Web associés, il est désormais recherché l'accès aux contenus balados depuis ces terminaux mobiles.

En raison d'une part de la taille limitée de la mémoire des téléphones portables et de la bande passante des réseaux cellulaires, et d'autre part, de la taille des fichiers podcastés (fichiers balados téléchargés), il est néanmoins, aujourd'hui, difficile de mettre en place le même système d'abonnement sur téléphone portable que sur ordinateur personnel.

C'est pourquoi des premières solutions propriétaires ont été développées pour répondre à cette attente du marché de la téléphonie mobile.

On connaît tout d'abord, par la demande de brevet US-2006/0155698, un système permettant à un utilisateur sur téléphone mobile d'être averti, par SMS *(Short Message Service)* ou message vocal, d'une mise à jour de site Web disposant de fils RSS. Le système comprend notamment un agrégateur en ligne (c'est-à-dire sur le réseau Internet) qui scrute les fils RSS pour le compte de l'utilisateur. A détection d'une modification, cet agrégateur envoie un message SMS formaté ou un message vocal pour avertir l'utilisateur. L'utilisateur retourne alors, par la voie informatique traditionnelle, sur le site Web pour constater les changements. L'utilisateur récupère éventuellement le fichier souhaité sur son ordinateur personnel et le charge sur son terminal mobile par des mécanismes traditionnels (connexion USB - *Universal Serial Bus,* Bluetooth ou équivalente).
Ce système concerne la notion de modification des sites Web et ne s'adresse nullement au domaine des balados (fichiers multimédias à télécharger) qui nécessitent le rapatriement du fichier multimédia sur le terminal mobile.

Un premier inconvénient de cette solution est qu'elle ne permet pas la récupération de fichiers multimédias associés à un fil RSS en tout lieu par le simple biais du téléphone mobile.
Un autre inconvénient de cette solution est que l'abonnement de l'utilisateur à un fil RSS requiert une connexion Internet afin d'accéder à l'agrégateur et paramétrer celui-ci.
Un problème qui se pose au regard de cette demande de brevet est alors celui de proposer un système et/ou un procédé permettant à l'utilisateur d'accéder, lors de la notification d'une mise à jour, aux fichiers balados sans que l'utilisateur ait à intervenir directement sur le réseau Internet et sur les équipements informatiques associés à ce réseau (par exemple un serveur Web).

On connaît cependant des solutions comme Mobilcast de Mélodéo ou Pod2mob (noms commerciaux) permettant, par l'intermédiaire d'une application dédiée et chargée sur le téléphone mobile, d'accéder à une pluralité de balados préchargés sur un serveur dédié du réseau de télécommunication mobile. Au lancement de l'application embarquée, cette dernière effectue une mise à jour des balados accessibles, puis l'utilisateur, par simple clic, procède au téléchargement du balado choisi. Cette solution s'apparente à une simple méthode de téléchargement de contenus sur un téléphone mobile.

La solution Mobilcast permet également d'enrichir la liste des podcasts accessibles par mobile en indiquant, depuis une interface dédiée de site Web, un nouveau balado destiné aux mobiles à partir d'une liste prédéfinie par le fournisseur. Cette liste prédéfinie permet au fournisseur de configurer à l'avance les contenus balados pour mobile. En outre, un temps de latence important est constaté entre la sélection d'un nouveau balado par l'interface Web et son accessibilité sur le serveur de téléphonie mobile.

Un inconvénient de ces solutions réside dans le fait que l'utilisateur doit déclencher volontairement une action (accès au portail mobile dédié) pour récupérer la liste des balados nouvellement disponibles sur le serveur et donc mis à jour. Un but de l'invention est aussi de rendre le suivi des modifications de contenus intrinsèquement indépendant d'une action de l'utilisateur.

On connaît également la solution Kimia (nom commercial) qui, à partir d'une liste de balados définie, vérifie d'éventuelles mises à jour et effectue, le cas échéant, un transcodage de ceux-ci au format mobile pour les rendre disponibles sur son serveur Web. L'utilisateur mobile est alors averti de la mise à jour des balados par voie de courriel et doit se rendre sur le site Web dédié pour accéder aux fichiers mis à jour. Une telle solution est conforme au procédé évoqué précédemment.

Un inconvénient majeur des solutions connues de l'art antérieur est que les contenus de type balado disponibles à l'utilisateur sont limités à ceux qui ont été au préalable chargés ou indiqués sur le serveur central (soit Web soit de téléphonie mobile). Un but de l'invention est donc de permettre à l'utilisateur d'accéder à n'importe quel contenu du type balado disponible, notamment ceux du réseau Internet. Les limitations techniques de ces solutions connues sont, dans ce dessein, un frein à l'accès en tout lieu de n'importe quel contenu de type balado.
Un autre inconvénient de ces solutions connues réside dans le fait que le téléphone mobile de l'utilisateur ne suffit pas pour accéder à un balado. Notamment, la solution Kimia requiert l'accès au balado mis à jour par la voie d'un site Internet et après notification par courriel alors que Mobilcast requiert d'accéder au site Internet du fournisseur pour ajouter un nouveau balado à la- liste des balados pour mobiles disponibles sur le portail (serveur) de téléphonie mobile.
Un autre inconvénient de la solution Kimia réside dans le caractère intrusif des notifications de mise à jour (par courriel dans ce cas).

Une autre solution est décrite par le document KR 100573037 (EP 1777632).

Ces problèmes de l'art antérieur sont résolus par l'utilisation d'un dispositif-passerelle entre les réseaux informatiques (celui auquel appartiennent les balados et fils RSS) et de télécommunication mobile, ce dispositif officiant comme agrégateur de contenus entre ces deux réseaux. Depuis son terminal mobile, l'utilisateur paramètre alors ce dispositif avec l'adresse d'un fil RSS de son choix. Le dispositif retourne alors au mobile l'adresse de téléchargement du contenu mis à sa disposition au travers du réseau mobile sur cette passerelle.
Ainsi, il est aisé de configurer ce dispositif pour un nouveau balado de son choix. L'automatisation du processus de récupération et formatage du balado par ce dispositif permet, lorsque couplé à l'invention, de rendre accessible rapidement des balados à l'utilisateur mobile là où l'art antérieur nécessite un délai important (requête à faire sur le serveur Web, temps de latence dans le traitement de la demande, délai pour la mise à disposition sur le serveur de téléphonie mobile).
En outre, il est désormais possible de paramétrer un nouveau balado sans l'intermédiaire du réseau Internet et de sites Web.

Ainsi, l'invention permet un accès illimité à tout balado de son choix, dans un délai rapide, en tout endroit et par l'intermédiaire unique du terminal mobile.

Dans ce dessein, l'invention a, tout d'abord, pour objet un procédé de téléchargement sur un terminal mobile tel que mentionné précédemment, comprenant en outre les étapes suivantes :
- le dispositif informatique enregistre ladite première adresse numérique (URL1), ledit enregistrement étant réalisé suite à l'envoi d'une première requête comprenant ladite première adresse numérique (URL1) par le terminal mobile à destination du dispositif informatique,
- le dispositif informatique vérifie si ladite première adresse (URL1) de la première requête correspond à un contenu référencé dans une première base de données, et
- si la vérification est positive,
- le dispositif informatique envoie au terminal mobile une deuxième adresse numérique (URL2) du dispositif informatique de sorte à permettre le téléchargement dudit contenu numérique téléchargé par le terminal mobile au travers d'un réseau de télécommunication mobile,
- le terminal mobile se connecte à ladite deuxième adresse numérique (URL2) via le réseau de télécommunication mobile et télécharge ledit contenu numérique mis à jour depuis le dispositif informatique,
- si la vérification est négative, il enregistre ladite première adresse (URL1) dans une deuxième base de données et acquitte ladite première requête auprès du terminal mobile.

Lors de l'étape initiale, l'utilisateur indique à la plateforme centrale (dispositif informatique) une nouvelle adresse de fil RSS sans limitation à celles préenregistrées sur le serveur. Il est entendu que l'enregistrement de l'adresse signifie que celle-ci n'était pas encore connue de la plateforme, c'est-à-dire nullement enregistrée dans une quelconque liste d'adresses pré-paramétrées. L'utilisation d'adresses au format URL permet notamment d'indiquer de nouveaux fils RSS de façon totalement indépendante de l'adresse de la plateforme.
Ladite première requête déclenche l'ensemble des étapes depuis l'enregistrement de l'adresse jusqu'à la récupération ultérieure de mise à jour du balado et du fil RSS en passant par la récupération initiale de ceux-ci, c'est-à-dire suite à l'inscription d'un nouveau fil RSS (nouvelle adresse) de l'utilisateur sur la plateforme.
En retour à la configuration de la plateforme, cette dernière envoie au mobile les indications (deuxième adresse) permettant de récupérer le balado sur la plateforme. Il s'agit notamment d'une adresse URL soit du balado directement soit d'un fil équivalent RSS généré par la plateforme et indiquant l'adresse où télécharger le balado depuis la plateforme. Cette deuxième alternative est préférable en ce qu'elle reste conforme aux mécanismes de la baladodiffusion, c'est-à-dire que, via le fil RSS généré à la nouvelle (deuxième) adresse, le téléphone mobile est averti d'une éventuelle mise à jour sans accéder au contenu.

Ce mécanisme permet à la fois une gestion transparente et rapide de la requête du terminal mobile. Le terminal est de suite averti que soit le balado est disponible - première adresse déjà en base et transmission de la deuxième adresse - soit qu'il doit entrer dans un cycle d'attente le temps que la plateforme récupère et mette à disposition le balado (ledit dispositif acquitte uniquement la première requête).

Le téléphone mobile de l'utilisateur est quant à lui muni d'une application embarquée de type agrégateur pour la gestion des fils RSS auxquels il est inscrit par le biais de la plateforme. Dans son rôle de relais de balados, il est prévu que le procédé comprenne également les étapes suivantes:
- ledit dispositif informatique génère, à ladite deuxième adresse numérique (URL2), un deuxième flux de données comprenant des indications de mise à jour dudit contenu numérique en fonction dudit premier flux de données,
- le terminal mobile vérifie, via le réseau de télécommunication mobile, les indications de mise à jour générées à ladite deuxième adresse numérique (URL2),
- le téléchargement par le terminal mobile dudit contenu numérique téléchargé étant fonction de la détection d'une mise à jour sur la deuxième adresse numérique.

On remarque ainsi que le fil RSS initial est propagé sur le réseau de télécommunication mobile. De la sorte, les mécanismes du fil RSS sont déportés sur ce réseau permettant au terminal mobile, via l'agrégateur embarqué, d'être informé des mises à jour de contenus. Les principes habituels relatifs aux fils RSS peuvent alors être appliqués, à savoir notamment le téléchargement automatique du contenu en cas de mise à jour.

Dans un mode de réalisation, l'agrégateur embarqué lit directement l'adresse URL2' dans le fil RSS récupéré à l'adresse URL2, procède au téléchargement du balado à l'adresse URL2' en cas de mise à jour et le stocke sur le téléphone mobile de l'utilisateur.

Dans un mode de réalisation, il est prévu que les flux de données renseignent chacun l'adresse numérique (URL1', URL2') de stockage du contenu numérique correspondant.
La simple connaissance du fil RSS permet ainsi soit à la plateforme soit à l'agrégateur du téléphone mobile d'avoir accès au contenu (via ces adresses URL1' et URL2') par simple lecture des informations du fil RSS. En outre, cette configuration permet de simplifier la gestion de la plateforme puisqu'une seule adresse initiale lui est fournie et en réponse une seule adresse est fournie au téléphone mobile. Dans la pratique, le fil RSS est au format XML et comprend une balise prédéfinie renseignant l'adresse URL à laquelle le contenu balado est téléchargeable.

Le réseau de téléphonie mobile présente de nombreuses contraintes relatives aux ressources soit des terminaux (mémoire disponible, capacité de traitement) soit du réseau en lui-même (débit, bande passante, ...). Pour s'adapter aux limitations du réseau, il est prévu que, lorsque lesdits flux de données sont des fichiers de balisage (type XML), le procédé comprend une étape de conversion dudit premier flux de données en ledit deuxième flux de données, ladite conversion comprenant la suppression et la substitution de balises ainsi que la modification de ladite première adresse numérique en ladite deuxième adresse numérique.
La suppression vise principalement à alléger la taille du fichier XML qui est récupéré par le terminal mobile, en ne conservant qu'un historique limité des modifications enregistrées dans le fichier (par exemple les dix derniers enregistrements) et en épurant les balises inutiles, par exemple des balises utilisées uniquement par iTunes (nom commercial). La substitution de balises a pour vocation de satisfaire, le cas échéant, le langage d'interprétation embarqué dans le mobile. A titre d'exemple, une balise nommée <address> sur un site anglophone pourra être substituée par une balise <adresse> interprétée par l'agrégateur du terminal mobile.
Enfin, l'adresse du balado dans le fichier XML du fil RSS est mise à jour pour indiquer désormais celle à laquelle est accessible le balado sur la plateforme.

Eventuellement, on prévoit aussi une étape de conversion dudit contenu numérique balado en un format multimédia compatible à celui dudit terminal mobile, ladite conversion étant réalisée par ledit dispositif informatique après téléchargement dudit contenu. A titre d'exemple, le balado initial peut être converti aux dimensions 176x144 points et au format Mpeg 4 *(Moving Picture Experts Group 4)* ou 3GP. Cependant un grand nombre de formats peut être utilisé. On envisage également de transmettre auparavant, par exemple dans la première requête émise depuis le terminal mobile, des données d'indication sur le(s) format(s) compatible(s) avec le terminal en question.

Particulièrement, la conversion dudit contenu numérique téléchargé précède la conversion dudit premier flux de données. Cet ordre présente l'avantage de disposer d'un balado déjà converti lorsque le fil RSS l'est à son tour. Ainsi, l'accès au fil RSS mis à jour et le téléchargement du balado associé ne sont pas réalisés sur un fichier à moitié converti ou non encore converti.

Dans le cas où la vérification par le dispositif informatique, si ladite première adresse (URL1) de la première requête correspond à un contenu référencé dans une première base de données, est négative, il est prévu que, suite à l'enregistrement de ladite première adresse numérique (URL1) dans la deuxième base de données, le procédé comprenne les étapes suivantes :
- le dispositif informatique télécharge ledit contenu numérique renseigné dans le premier flux de données généré à la première adresse (URL1),
- le dispositif informatique convertit ledit contenu numérique téléchargé et le premier flux de données en des formats compatibles avec le terminal mobile, et
- une fois les conversions effectuées, le dispositif informatique envoie ladite deuxième adresse numérique (URL2) audit terminal mobile.

Par ces étapes, la plateforme récupère le balado, le convertit au format requis en même temps que le fil RSS et rend ceux-ci accessibles au terminal mobile en lui transmettant la deuxième adresse.

Pour économiser l'énergie du téléphone, il est prévu qu'après l'acquittement, le téléphone coupe sa connexion avec la plateforme. Ainsi, pour avertir celui-ci, l'envoi de la deuxième adresse numérique est effectué en réponse à une requête ultérieure du terminal mobile. En pratique, on prévoit, de façon similaire à ce que fait un agrégateur traditionnel pour vérifier les mises à jour, que le téléphone mobile (via son application agrégateur embarquée) requête périodiquement la plateforme jusqu'à l'obtention de la nouvelle adresse.

Selon une variante toutefois intrusive, l'envoi de la deuxième adresse numérique est effectué sous la forme d'un envoi poussé *(push* en anglais) audit terminal mobile. Par exemple, par un message texte sur le téléphone ou une notification réseau forcée affichant un message sur le téléphone (par exemple une commande prenant la main sur l'application embarquée pour remonter la notification). Dans ce cas, on considère que cette notification est émise en réponse à la requête initiale de l'utilisateur même si un délai de traitement s'est écoulé depuis.

Dans un mode de réalisation, ladite deuxième adresse numérique est l'adresse de stockage (URL2') sur le dispositif informatique dudit contenu numérique téléchargé.

L'invention a également pour objet une plateforme pour le téléchargement sur un terminal mobile d'un contenu numérique mis à jour épisodiquement et renseigné dans un premier flux de données comprenant des indications de mise à jour dudit contenu numérique, ledit premier flux de données étant généré à une première adresse numérique (URL1) d'un réseau informatique, la plateforme comprenant :
- des moyens pour enregistrer, à réception d'une première requête d'un terminal mobile, ladite première adresse numérique (URL1), lesdits moyens pour enregistrer comprenant des première et deuxième bases de données, la première base stockant ladite première adresse numérique à réception de la première requête lorsque cette première adresse n'est pas enregistrée dans la deuxième base de données,
- des moyens de vérification, via le réseau informatique, des indications de mise à jour générées à ladite première adresse numérique,
- des moyens pour télécharger et stocker ledit contenu numérique renseigné dans ledit premier flux de données en cas de mise à jour, et
- des moyens pour transmettre, au terminal mobile, une deuxième adresse numérique (URL2) du dispositif informatique utilisée pour réaliser le téléchargement dudit contenu numérique par le terminal mobile au travers d'un réseau de télécommunication mobile.

Des moyens logiciels de vérification peuvent être utilisés pour détecter une éventuelle mise à jour. Cette dernière est détectée si les données dont dispose la plateforme diffèrent de celles présentes à l'adresse indiquée, par exemple (i) à l'initialisation du système, du fait que la plateforme n'a pas encore accédé au site, le fil RSS lu à l'adresse URL1 diffère de ce qui est enregistré sur la plateforme de telle sorte que cette dernière considère qu'une mise à jour a eu lieu et donc procède aux étapes suivantes de téléchargement, ou (ii) ultérieurement lorsque le site Web et son contenu sont mis à jour de telle sorte que les données du fil RSS de ce site diffèrent de celles stockées sur la plateforme.

Dans un mode de réalisation, il est prévu que les moyens pour télécharger et stocker sont agencés pour déplacer ladite première adresse enregistrée dans la première base de données vers la deuxième base de données lorsque ledit contenu numérique a été téléchargé et mis à la disposition dudit terminal mobile sur le réseau de télécommunication mobile.

Ce déplacement s'effectue simplement par effacement de la première adresse dans la première base et son enregistrement dans la deuxième base. Ceci facilite la détection d'une adresse déjà présente dans la plateforme, c'est-à-dire une adresse dont le contenu est déjà accessible au format adapté aux mobiles. Des traitements inutiles de téléchargement et conversion de contenus déjà enregistrés sont ainsi évités.

Eventuellement, les moyens pour télécharger et stocker comprennent un moyen logiciel de conversion dudit contenu numérique et dudit premier flux de données en un contenu numérique adapté et un second flux de données adapté au format dudit terminal mobile.

Le terme plateforme (équivalant au terme dispositif informatique) doit être compris dans un sens large, notamment par le fait qu'elle peut être composée de plusieurs équipements assignés aux différentes fonctions qui sont développées par la suite, notamment un équipement peut traiter le fil RSS et la deuxième adresse numérique URL2 alors qu'un second équipement peut être utilisé comme moyen de stockage et de mise à disposition sur le réseau mobile des balados convertis (à l'adresse URL2').

L'invention a également pour objet un système pour le téléchargement sur un terminal mobile d'un contenu numérique mis à jour épisodiquement et renseigné dans un premier flux de données comprenant des indications de mise à jour dudit contenu numérique, le système comprenant :
- au moins un serveur informatique générant ledit premier flux de données à une première adresse numérique (URL1),
- une plateforme précédemment présentée, et
- au moins un terminal mobile comprenant des moyens pour établir, sur le réseau de télécommunication mobile, une connexion avec ladite deuxième adresse numérique (URL2) et télécharger ledit contenu numérique depuis ledit dispositif informatique.

Dans la pratique, le balado et le fil RSS sont disponibles sur le même serveur Web. Selon une variante, le fil RSS généré à la première adresse URL1 sur un serveur Web renseigne l'adresse de stockage URL1' du balado dur un autre serveur Web du réseau Internet.

On comprendra mieux l'invention à l'aide de la description, faite ci-après à titre purement explicatif, d'un mode de réalisation de l'invention, en référence aux figures annexées :
- la Fig. 1 représente un exemple d'architecture système dans laquelle l'invention est mise en oeuvre,
- les Fig. 2, 3 et 5 sont des ordinogrammes représentant différentes étapes du processus selon l'invention (général pour Fig. 2, dédié terminal mobile pour Fig. 3 et dédié plateforme centrale pour Fig. 5), et
- la Fig. 4 est un chronogramme des échanges de données entre les équipements de l'architecture selon la Fig. 1.

Dans l'exemple de réalisation ici détaillé, le terme "podcast" est utilisé pour désigner un balado comme défini précédemment.

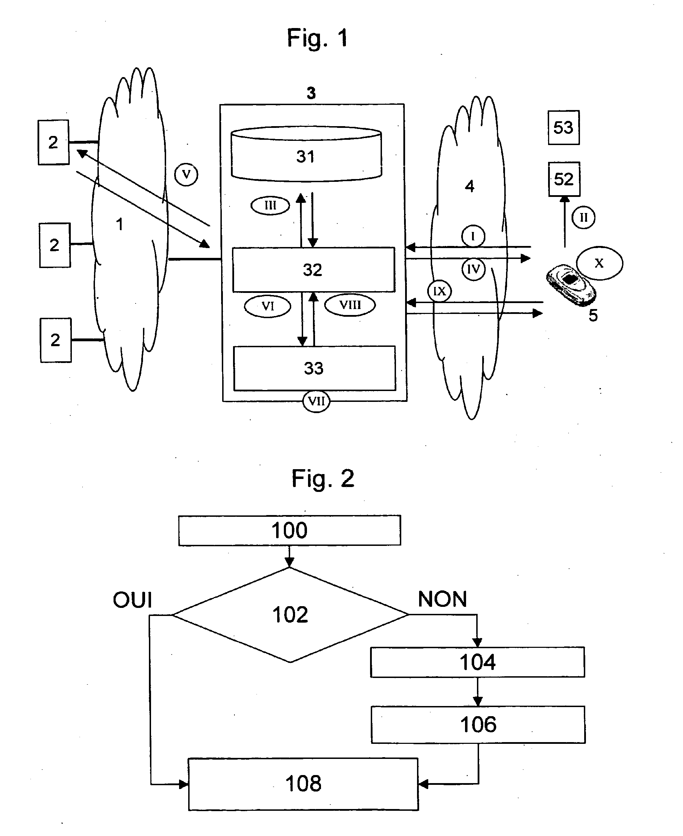

En référence à la Fig. 1, des podcasts (fichiers multimédias) et leurs fils RSS sont mis à disposition d'usagers sur le réseau Internet 1 selon les mécanismes connus de fils RSS dans le domaine de l'Internet. Les serveurs Web 2 stockent les fichiers multimédias et diffusent les fils RSS associés à ces médias. Ci-dessous est illustré un exemple simplifié de fil RSS :

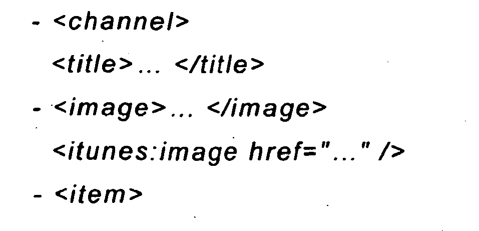

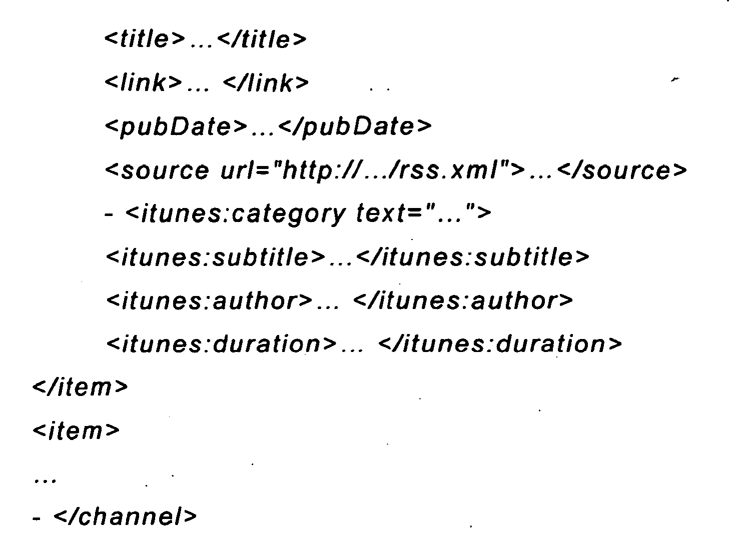

Ce fil délimité par les balises <channel> se compose notamment d'une section générale (ici <title> et <image>) et de plusieurs éléments délimités par les balises <item> et </item>. Chacun de ces éléments définit une donnée datée et comprend un grand nombre de champs (tous non représentés), notamment des champs utilisés par le lecteur iTunes (nom commercial). Dans le cadre des podcasts, les items successifs représentent les indications de versions mises à jour, par exemple le premier élément <item> renseigne les informations relatives à la version actuelle (notamment sa date), le deuxième élément <item> les informations relatives à la version précédente, etc...

Une plateforme centrale 3 appartient également au réseau Internet 1. Cette plateforme comprend trois éléments :
- une Base de Données 31 pour stocker des informations sur les podcasts abonnés ;
- un Serveur Web et FTP 32 pour héberger les podcast transcodés
- un automate 33 contenant un serveur Web pour transcoder le fichier RSS et les médias ;
La plateforme est également munie d'une interface (non représentée) avec un réseau de télécommunication mobile 4 tel que ceux utilisés traditionnellement par les téléphones mobiles (GSM, GPRS, EDGE, UMTS, ...).

Un utilisateur final est équipé d'un téléphone portable 5 capable de se connecter et communiquer à travers le réseau 4. Le téléphone 5 est muni d'un logiciel 51 permettant l'interfaçage avec la plateforme 3 sur le réseau 4. Ce logiciel (application embarquée) permet notamment à l'utilisateur d'accéder à un portail de podcasts mis à disposition sur la plateforme 3 de façon sensiblement similaire aux solutions de l'art antérieur.

Notamment, la base de données 31 comprend une table Podcast_Portail 31a référençant une liste de podcasts prédéfinis d'éditeurs partenaires et hébergés par le serveur 32. Cette table contient les attributs : (URL_1, URL_2, <title_channel>). URL_1 définit l'adresse du podcast sur le réseau Internet 1 et URL_2 l'adresse sur la plateforme 3 à partir de laquelle les téléphones mobiles 5 peuvent accéder aux podcasts. <title_channel> permet d'identifier simplement à l'utilisateur le podcast concerné, par exemple par une chaîne de caractères. Voici un exemple de table Podcast_Portail comprenant deux entrées :
Entrée 1 :
   - URL_1 : http://www.lequipe.fr/podcast_rss.xml,
   - URL_2 : http://plateforme/Data/lequipe/Format_mobile/rss.xml
   - <title_channel> : L'équipe ;
Entrée 2 :
   - URL_1 : http://www.BFM.com/BFMchannel9.xml,
   - URL_2 : http://plateforme/Data/BFM/Format_mobile/rss.xml
   - <title_channel> : BFM
   En se connectant avec son téléphone 5 sur le portail précité, l'utilisateur accède à la liste prédéfinie issue de la table 31 a et par des mécanismes traditionnels télécharge le contenu multimédia associé.
   Egalement, selon des mécanismes déjà connus, l'utilisateur s'inscrit au fil RSS associé à ce contenu souhaité, ce qui paramètre l'application embarquée 51 dans le téléphone pour périodiquement se connecter au fil RSS de la plateforme et télécharger si nécessaire automatiquement le contenu mis à jour. L'application 51 officie alors comme agrégateur de contenu au sens où il est compris dans le domaine des fils RSS sur l'Internet.

Pour la mise en oeuvre de l'invention, la base de données 31 comprend également une table Podcast_Abonné 31b référençant l'ensemble des podcasts demandés par les usagers par le biais de la présente invention et une table Podcast_Traitement 31 c référençant les podcasts demandés par les usagers mais non encore disponibles au téléchargement du fait que la demande est en cours de traitement comme nous le verrons par la suite.

La table Podcast_Traitement 31c contient l'attribut : (URL_1). Il s'agit de l'adresse demandée par l'utilisateur. Voici un exemple :
Entrée 1 :
   URL_1 : http://tf1.lci.fr/xml/rss/0,150,00.xml

La table Podcast_Abonné 31b contient les attributs : (URL_1, URL_2, <title_channel>). Elle a un format similaire à la table Podcast_Portail, mais son contenu diffère en ce qu'elle référence l'ensemble des podcasts volontairement demandés par les utilisateurs.
Suite au traitement (que nous verrons pas la suite) du podcast enregistré dans la table Podcast_Traitement ci-dessus, la table Podcast_Abonne comprend l'enregistrement suivant :
- URL_1 : http://tf1.lci.fr/xml/rss/0,,23,00.xml
- URL_2 : http://dispositif_inormatique.com/Data/...
   ... LCI_La_meteo/Format_mobile/RSS.xml
- <title_channel> : LCI Météo

L'automate transcodeur 33 contient, quant à lui, une base de données contenant une table Podcast_Transcodé référençant les podcasts qui sont déclarés disponibles sur la plateforme podcast 3. Cette table contient l'attribut (<title_channel>, URL_1), par exemple :
- <title_channel> : LCI Météo
- URL_1 : :http://tf1.lci.fr/xml/rss/0,,23.00.xml
En pratique, l'automate 33 reçoit les médias et le flux RSS du serveur Web 32, transcode les médias vers des formats lisibles pour le mobile (par exemple .3gp) (plusieurs formats d'encodage peuvent être envisagés) et réduit la taille du fichier RSS, notamment en éliminant les tags iTunes et en ne conservant que les 20 derniers médias.

Le téléphone mobile 5 embarque une application rich-média 51 de lecture de podcasts basée sur la technologie Bluestreak (nom commercial). Une application rich-média est un système ou une application logicielle qui permet, sur un terminal et notamment un terminal mobile, d'accéder à la fois à des contenus de type image, de type son, de type texte et de type vidéo, l'ensemble des contenus étant joués (exécutés pour en réaliser un rendu soit sonore soit visuel à l'utilisateur) en parallèle et non de manière linéaire. Grâce à cette application, il est possible de lire un fichier RSS de taille raisonnable, c'est-à-dire inférieur à 400 ko (kilo-octets) en raison de la mémoire limitée du téléphone.
Trois fichiers XML sont stockés sur le téléphone pour classer les podcasts enregistrés sur le téléphone:
- Abonnement.xml 52 qui référence les podcasts abonnés (c'est-à-dire les adresses de fils RSS) et liste des médias (fichiers multimédias) enregistrés sur la carte mémoire du téléphone,
- Podcast_Demandés.xml 53 qui référence les podcasts des nouveaux podcasts demandés,
- Hors_Abonnement.xml 54 qui liste des podcasts et fils RSS sur lesquels l'utilisateur ne s'est pas abonné, mais a déjà procédé au téléchargement de ceux-ci.
L'application 51 offre la possibilité à l'utilisateur de s'abonner à tout type de podcasts en entrant l'adresse URL du podcast désiré.

### Demande d'abonnement à un podcast non lisible sur le mobile

Le téléphone 5 possède des moyens pour se connecter sur le réseau Internet 2 à travers le réseau de téléphonie mobile 4. De tels moyens sont bien connus de l'art antérieur. Ainsi l'utilisateur qui navigue sur Internet soit depuis un ordinateur soit depuis son téléphone mobile se trouve intéressé par un podcast Bouygues (nom commercial) comprenant un flash d'information audio et un fil RSS à l'adresse « http://www.bouygues.com/rss.xml ».
En référence aux Fig. 1, 2 et 4, l'utilisateur déclenche une fonction de l'application embarquée sur le mobile 5 dont l'exécution envoie (I, 200) une requête http *ajout_podcast(http:*//*www.bouygues.com*/*rss.xml)* à la plateforme 3 au travers du réseau de téléphonie mobile 4.

Une alternative est que depuis le portail précité, l'utilisateur entre dans une rubrique « autre podcast » et renseigne manuellement l'adresse (url) « http://www.bouygues.com/rss.xml » du podcast qu'il souhaite recevoir sur son mobile.

Le mobile stocke (II) l'url du podcast dans le fichier local Podcast_demande.xml 52 sur la mémoire du téléphone. Ce fichier a la forme d'un document XML listant par des balises <URL_1>, <title_channel> et <date>, les adresses, noms de podcast demandés et la date de la requête. L'objectif de ce fichier 52 est de conserver une trace des podcasts demandés pour que le mobile s'informe, par la suite, de la disponibilité du podcast demandé.

De son côté, le serveur Web 32 de la plateforme 3, traite (100) la requête *ajout_podcast(http:llwww.bouygues.com*/*rss.xml)* et interroge la base de données 31 pour déterminer si le podcast a déjà été demandé par un autre mobile ou si la conversion du podcast est déjà réalisée par la plateforme (III, 102).

Si le podcast demandé par l'utilisateur n'est pas présent dans la table Podcast_Portail 31 a ou Podcast_Abonné 31b (sortie NON de 102), le serveur Web 32 renvoie au mobile que sa demande est bien prise en compte (106, 202) et enregistre l'adresse URL_1= *http:*//*www.bouygues.com*/*rss.xml* dans la table Podcast_Traitement 31 c (104).

Si le podcast demandé par l'utilisateur est dans la table Podcast_Portail 31a ou Podcast_Abonné 31b (sortie OUI de 102), alors le serveur 32, qui peut avoir déjà acquitté la requête (202), informe le mobile 5 que le podcast est disponible en envoyant, en réponse à la requête *Ajout_Podcast,* les paramètres du podcast demandé (URL_1, URL_2, <title_channel>) récupérés de la table concernée (IV, 108, 204).

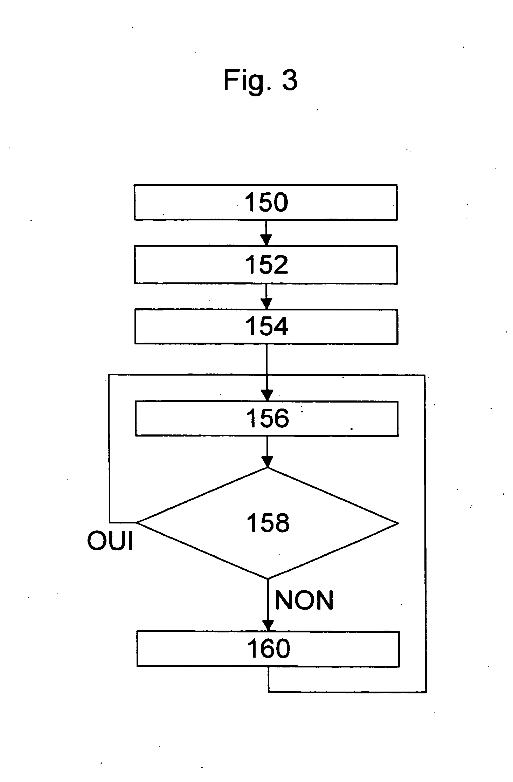

En référence à la Fig. 3, le mobile recevant (150) les paramètres du podcast (URL1, URL2, <title_channel>), ajoute URL_2 et <channel_title> dans le fichier Abonnés.xml 53 et supprime URL_1 dans le fichier Podcast_Demandé.xml 52 (152). La présence de URL_2 dans le fichier Abonnés.xml induit à mise à jour régulière du podcast conformément aux mécanismes traditionnels relatifs au suivi des mises à jour au travers de fils RSS (l'application embarquée 51 officie alors comme agrégateur de contenus).

### Conversion du podcast au format mobile.

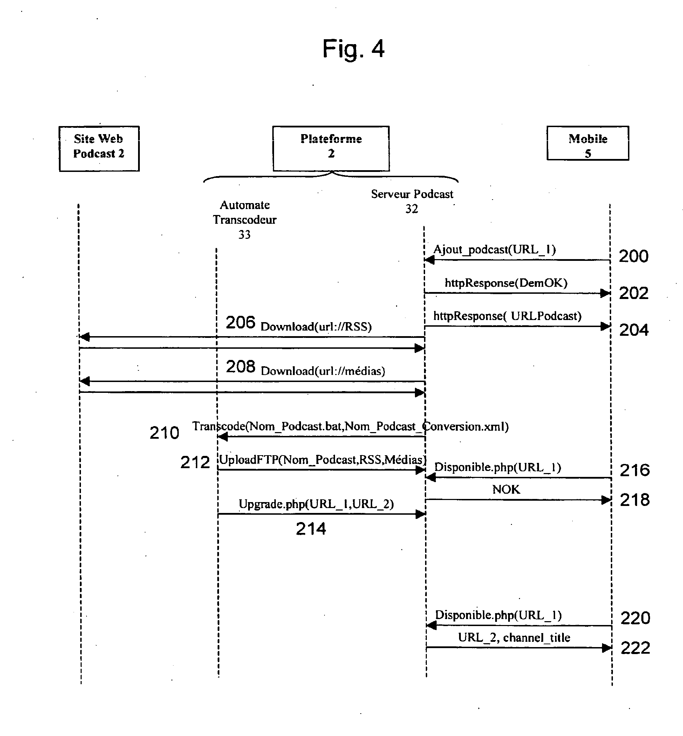

La présence de l'url *http:*//*www.bouygues.com*/*rss.xml* dans la table Podcast_Traitement 31c entraîne le processus de conversion du podcast au format mobile. De nouveau en référence aux Fig. 1 et 4, le serveur Web 32 de la plateforme lance le téléchargement (206 - téléchargement du fil RSS, 208 - téléchargement du fichier podcast), via le réseau Internet 1 : - du flux RSS du podcast, et
- des médias du podcast

Les répertoires Nom_Podcast (ici "Bouygues") et Format_Internet sont créés dans un répertoire local Data (sur le serveur Web 32) : Data\Bouygues.
Les médias et le flux RSS téléchargés sont stockés dans ce répertoire (V, Fig. 1) Data\Bouygues\Format_Internet.

Le serveur Web 32 génère un fichier "nom_podcast.bat" pour l'opération de transcodage. Ce fichier contient le nom et l'adresse dans le répertoire local des médias à convertir et le format de conversion audio/vidéo. Ci-dessous est un exemple simplifié d'un tel fichier :

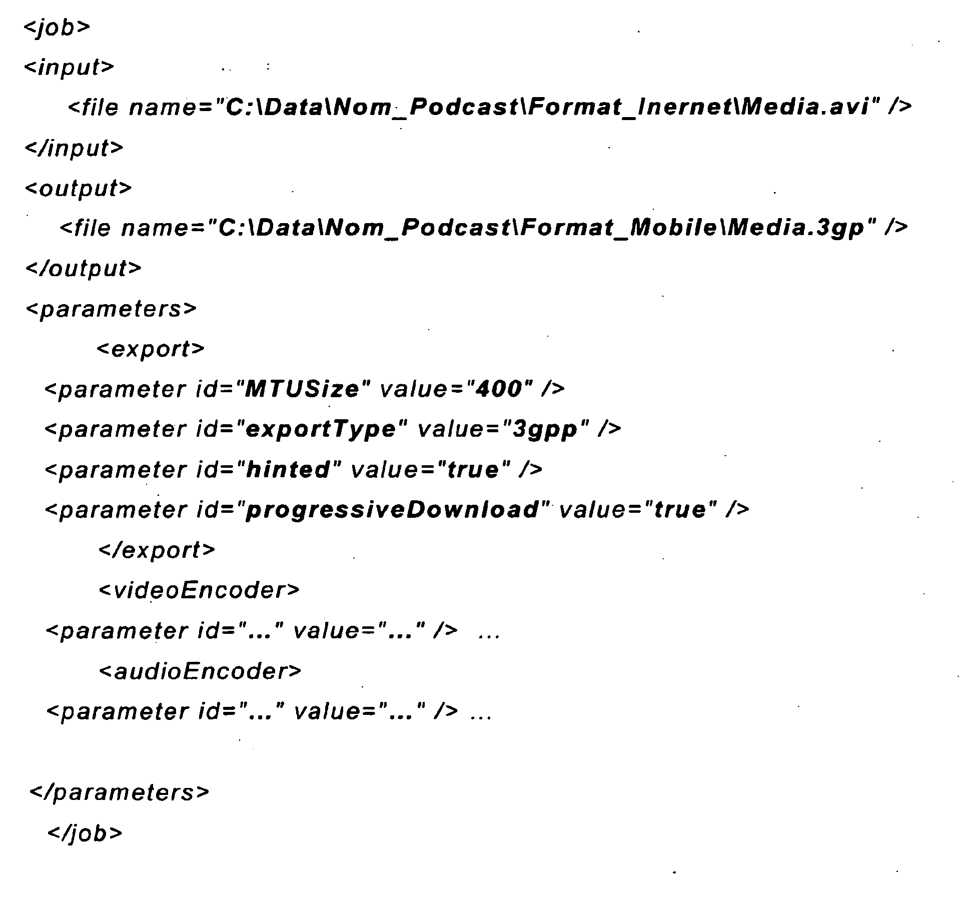

Les balises <input> définissent le fichier initial à convertir et les balises <output> précisent l'emplacement de stockage du fichier une fois converti.
Des paramètres (<parameters>) sont définis à la fois pour paramétrer l'encodage vidéo et l'encodage audio.
Enfin, le serveur 32 envoie (VI, 210) la requête Transcode avec comme paramètre l'adresse du fichier .bat et l'adresse du RSS pour convertir les médias à l'automate de transcodage 33: *Transcode(http:*//*plateforme*/*Data*/*Bouygues*/*Format_Internet*/*nom_podc ast.bat, http:*//*plateforme*/*data*/*Bouygues*/*Format_Internet*/*RSS.xml)*

A la réception de la requête Transcode comprenant les paramètres indiqués ci-dessus, l'automate 33 :
(a). crée le répertoire Bouygues dans l'arborescence locale de ses fichiers : d:/Data/A_transcoder si le répertoire n'existe pas,
(b). télécharge les médias et le fichier RSS (téléchargés sur le serveur 32) par ftp *(File Transport Protocol)* dans le répertoire d:/Data/A_transcoder/Bouygues,
transcode (VII, Fig. 1) les médias et le fichier RSS. L'automate 33 convertit les médias du podcast en Mpeg4 dans un conteneur .3gp et le fichier RSS est allégé par suppression des tags iTunes et référencement des dix derniers médias du podcast.
Notamment, l'automate transcodeur 33 effectue la conversion du fichier RSS par un composant C/C++. Son rôle est de télécharger le fichier RSS et de parcourir le fichier pour y appliquer des règles de substitution ou suppression de tags dans le but d'alléger la taille du fichier RSS.xml. Le fichier RSS est également modifié pour que les adresses url des fichiers multimédias pointent vers les fichiers multimédias qui sont stockés sur le serveur Web 32 (VII, Fig. 1) : le fichier RSS qui indiquait initialement
*http:*//*www.bouygues.com*/*medias*/*flash.wav*
est modifié pour désormais pointer sur
*http:*//*plateforme*/*Data*/*Bouygues*/*Format_Mobile*/*flash.mpg*

En reprenant l'exemple de fil RSS présenté ci-dessus, l'on obtient de façon schématique le fichier suivant (suppression des balises iTunes) dans lequel seul un nombre prédéfini d'éléments (<item>) a été conservé (les vingt dernières versions du média par exemple). 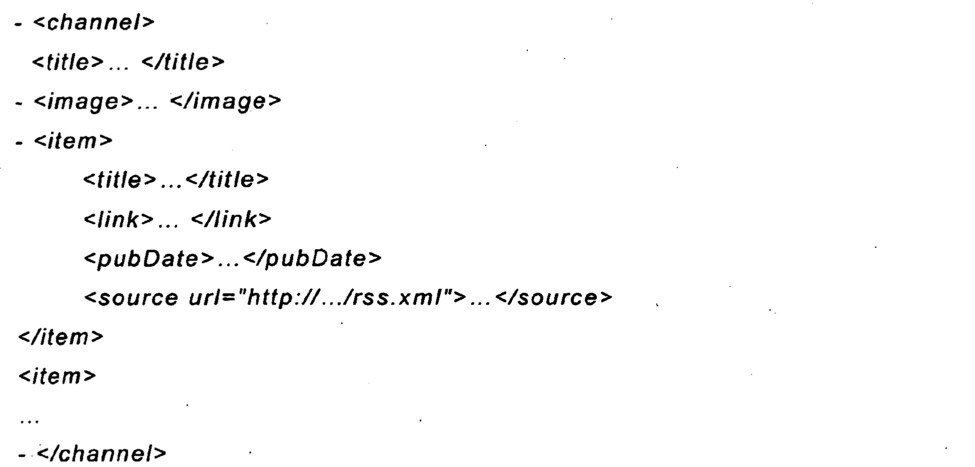
(c). upload (VIII, Fig. 1 ; 212) les médias et le fichier RSS convertis sur la plateforme podcast du serveur Web 32;
(d). supprime les fichiers dans d:/Data/A_transcoder/Bouygues,
(e). consulte la table Podcast_Transcodé :,
   o Si Nom_Podcast (ici « Bouygues ») n'est pas déjà dans la table Podcast_Transcodé, le podcast est nouveau et n'est pas encore déclaré comme disponible sur la plateforme 3 :
      ■ l'automate 33 envoie (214) la requête Upgrade(Nom_Podcast) au serveur 32 pour l'avertir d'ajouter Nom_Podcast et l'URL_2 générée dans la table Podcast_Abonné 31b de sa base de données et supprimer Nom_Podcast de la table Podcast_Traitement 31c,
      ■ et écrit le champ « Bouygues » dans la table Podcast_Transcodé.
   o Si Nom_Podcast est déjà dans la table Podcast_Transcodé (c'est-à-dire il ne s'agit que d'une simple mise à jour du podcast), le podcast est déclaré comme disponible sur la plateforme podcast ; aucune requête n'est alors envoyée, puisque le "upload" vient écraser les anciens fichiers.

### Notification de disponibilité au mobile

A la lecture du fichier Podcast_demandés.xml 53, le mobile 5 envoie (IX, 154, 216, 220), à intervalles de temps, la requête :
*Disponible(URL:*//*RSS_Bouygues.XML)*
au serveur Web 32 pour savoir si le podcast demandé (ou les podcasts demandés) est disponible.
Dans le cas où le podcast demandé a été traité, le serveur Web 32 renvoie (108, 222) les paramètres du podcast demandé (URL_1,URL_2, <title_channel>) où URL_2 est l'adresse sur la plateforme du podcast converti dans le format adapté pour le mobile.
Dans l'autre cas, le serveur répond au mobile que la demande est bien prise en compte (218).

Eventuellement, la notification de la disponibilité du podcast peut aussi être transmise par *push* d'un message au mobile.

### Abonnement du mobile au podcast

Le mobile reçoit l'adresse du fichier RSS transcodé au format mobile (suite au message 108 ou 222), il l'ajoute (X, Fig. 1 ; 152) à sa table local Podcast_Abonné.xml pour que ce dernier entre dans le processus de mise à jour des podcasts.

### Mise à jour des podcasts

Les podcasts sont des fils d'informations régulièrement mis à jour. Pour que les nouveaux médias soient notifiés et lisibles sur le mobile, la plateforme doit mettre à jour le flux RSS et les médias au format du mobile.

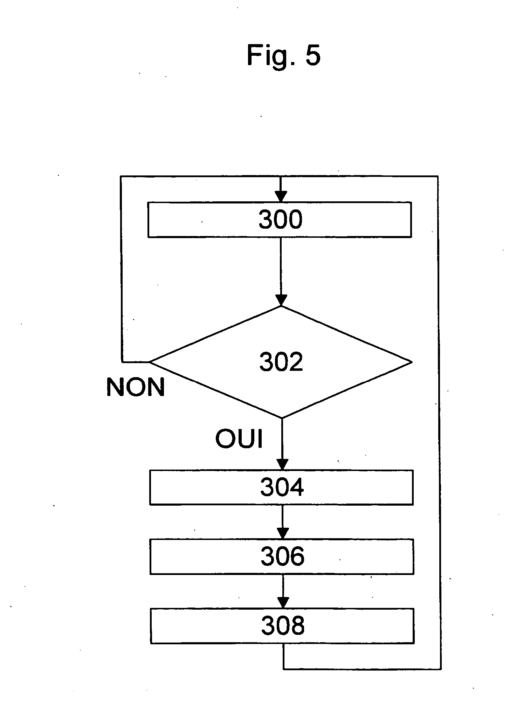

En référence à la Fig. 5, partant des adresses URL présentes dans les tables Podcast_portail 31 a et Podcast_Abonné 31b, le serveur Web 32 vérifie (300) les flux RSS attachés à ces adresses. Cette vérification est cyclique avec des périodes qui peuvent varier d'un podcast à l'autre parce que, par exemple, l'utilisateur a configuré une période de vérification.
Le serveur Web identifie les nouveaux médias par comparaison (302) du flux RSS et des médias contenus sur le répertoire Format_Internet du dossier associé au podcast.
En cas d'absence de différence dans la comparaison (sortie NON de 302), le serveur Web 32 reprend son cycle de vérification.
En cas de différence dans cette comparaison (sortie OUI de 302), les nouveaux médias sont téléchargés (304) et mis au bon format par envoi de la requête Transcode.php(Nom_Podcast.bat,RSS.XML) à l'automate transcodeur (306).
Le processus de mise à jour se fait de façon à ce que les médias soient convertis (306) et uploadés (téléchargés vers le serveur) (308) sur le serveur Web 32 avant l'upload du nouveau fichier RSS au format mobile.
Le serveur Web 32 rentre alors de nouveau dans le cycle décrit ci-dessus de vérification des fils RSS (300).

En parallèle, le téléphone 5 vérifie (156) les fils RSS convertis et générés par la plateforme 3 qui sont présents dans le fichier Abonnés.xml 53 (également Hors_Abonnement.xml 54). Les mécanismes traditionnels de comparaison de fil RSS (158) et de téléchargement du podcast (160) en cas de mise à jour sont appliqués.

## Revendications

1. Procédé de téléchargement sur un terminal mobile (5) d'un contenu numérique mis à jour épisodiquement et renseigné dans un premier flux de données comprenant des indications de mise à jour dudit contenu numérique, ledit premier flux de données étant généré à une première adresse numérique, URL1, par au moins un serveur informatique (2) d'un réseau informatique (1),
le procédé comprenant les étapes suivantes :
- un dispositif informatique (3) vérifie (302), via ledit réseau informatique, les indications de mise à jour générées à ladite première adresse numérique, URL1,
- ledit dispositif informatique télécharge (304) ledit contenu numérique renseigné dans ledit premier flux de données en cas de mise à jour, ledit contenu numérique téléchargé étant stocké sur le dispositif informatique (3),
**caractérisé en ce que le** procédé comprend, en outre, les étapes suivantes :
- le dispositif informatique (3) enregistre ladite première adresse numérique, URL1, ledit enregistrement étant réalisé suite à l'envoi d'une première requête comprenant ladite première adresse numérique, URL1, par le terminal mobile à destination du 1 dispositif informatique,
- le dispositif informatique vérifie (III, 102) si ladite première adresse, URL1, de la première requête correspond à un contenu référencé dans une première base de données (31b), et
- si la vérification est positive,
- le dispositif informatique envoie (IV, 108, 204, 222) au terminal mobile une deuxième adresse numérique, URL2, du dispositif informatique de sorte à permettre le téléchargement dudit contenu numérique téléchargé par le terminal mobile au travers d'un réseau de télécommunication mobile (4),
- le terminal mobile se connecte à ladite deuxième adresse numérique, URL2, via, le réseau de télécommunication mobile et télécharge ledit contenu numérique mis à jour depuis le dispositif informatique,
- si la vérification est négative, il enregistre (104) ladite première adresse, URL1, dans une deuxième base de données (31c) et acquitte (106, 202) ladite première requête auprès du terminal mobile.

2. Procédé selon la revendication 1, comprenant en outre les étapes suivante
- ledit dispositif informatique (3) génère, à ladite deuxième adresse numérique, URL2, un deuxième flux de données comprenant des indications de mise à jour dudit contenu numérique en fonction dudit premier flux de données,
- le terminal mobile (5) vérifie, via le réseau de télécommunication mobile (4), les indications de mise à jour générées à ladite deuxième adresse numérique, URL2, et
- le téléchargement par le terminal mobile (5) dudit contenu numérique téléchargé étant fonction de la détection d'une mise à jour sur la deuxième adresse numérique.

3. Procédé selon la revendication 2, dans lequel les flux de données renseignent chacun l'adresse numérique, URL1', URL2', de stockage du contenu numérique correspondant.

4. Procédé selon la revendication 3, dans lequel lesdits flux de données sont des fichiers de balisage, le procédé comprenant une étape de conversion (VII) dudit premier flux de données en ledit deuxième flux de données, ladite conversion comprenant la suppression et la substitution de balises ainsi que la modification de ladite première adresse numérique, URL1, en ladite deuxième adresse numérique.

5. Procédé selon l'une quelconque des revendications précédentes, comprenant en outre une étape de conversion (VII) dudit contenu numérique en un format multimédia compatible à celui dudit terminal mobile, ladite conversion étant réalisée par ledit dispositif informatique (3) après téléchargement dudit contenu.

6. Procédé selon la revendication 5 en dépendance de la revendication 4, dans lequel la conversion dudit contenu numérique téléchargé précède la conversion dudit premier flux de données.

7. Procédé selon l'une quelconque des revendications précédentes, comprenant, suite à l'enregistrement dans la deuxième base de données (31c), les étapes suivantes :
- le dispositif informatique (3) télécharge (V, 206, 208) ledit contenu numérique renseigné dans le premier flux de données généré à la première adresse, URL1,
- le dispositif informatique (3) convertit (VII) ledit contenu numérique téléchargé et le premier flux de données en des formats compatibles avec le terminal mobile (5), et
- une fois les conversions effectuées, le dispositif informatique (3) envoie (108, 222) ladite deuxième adresse numérique, URL2, audit terminal mobile.

8. Procédé selon la revendication 7, dans lequel l'envoi de la deuxième adresse numérique est effectué en réponse à une requête ultérieure (IX, 154, 216, 220) du terminal mobile.

9. Procédé selon la revendication 7, dans lequel l'envoi de la deuxième adresse numérique est effectué sous la forme d'un envoi poussé audit terminal mobile.

10. Procédé selon la revendication 1, dans lequel ladite deuxième adresse numérique est l'adresse de stockage, URL2', sur le dispositif informatique (3) dudit contenu numérique téléchargé.

11. Plateforme (3) pour le téléchargement sur un terminal mobile (5) d'un contenu numérique mis à jour épisodiquement et renseigné dans un premier flux de données comprenant des indications de mise à jour dudit contenu numérique, ledit premier flux de données étant généré à une première adresse numérique, URL1, d'un réseau informatique (1), la plateforme comprenant :
- des moyens pour enregistrer (31), à réception d'une première requête d'un terminal mobile, ladite première adresse numérique, URL1, lesdits moyens pour enregistrer (31) comprenant des première et deuxième bases de données (31b, 31c), la première base (31c) stockant ladite première adresse numérique à réception de la première requête lorsque cette première adresse n'est pas enregistrée dans la deuxième base de données (31 b),
- des moyens de vérification (32), via le réseau informatique, des indications de mise à jour générées à ladite première adresse numérique,
- des moyens pour télécharger et stocker (32) ledit contenu numérique renseigné dans ledit premier flux de données en cas de mise à jour, et
- des moyens pour transmettre (32), au terminal mobile, une deuxième adresse numérique, URL2, du dispositif informatique utilisée pour réaliser le téléchargement dudit contenu numérique par le terminal mobile au travers d'un réseau de télécommunication mobile.

12. Plateforme selon la revendication 11, dans laquelle les moyens pour télécharger et stocker (32) sont agencés pour déplacer ladite première adresse enregistrée dans la première base de données (31c) vers la deuxième base de données (31b) lorsque ledit contenu numérique a été téléchargé et mis à la disposition dudit terminal mobile (5) sur le réseau de télécommunication mobile (4).

13. Plateforme selon la revendication 12, dans laquelle les moyens pour télécharger et stocker comprennent un moyen logiciel de conversion dudit contenu numérique et dudit premier flux de données en un contenu numérique adapté et un second flux de données adapté au format dudit terminal mobile (5).

14. Système pour le téléchargement sur un terminal mobile (5) d'un contenu numérique mis à jour épisodiquement et renseigné dans un premier flux de données comprenant des indications de mise à jour dudit contenu numérique, le système comprenant :
- au moins un serveur informatique (2) générant redit premier flux de données à une première adresse numérique, URL1,
- une plateforme (3) selon l'une quelconque des revendications 11 à 13, et
- au moins un terminal mobile (5) comprenant des moyens pour établir, sur le réseau de télécommunication mobile (4), une connexion avec ladite deuxième adresse numérique (URL2) et télécharger ledit contenu numérique depuis ledit dispositif informatique (3).

## Claims

1. A method for downloading to a mobile terminal (5) a digital content periodically updated and provided with information in a first data flow including indications relating to the updating of the digital content, said first data flow being generated at a first digital address, URL1, by at least one computer server (2) of a computer network (1),
the method including the following steps:
- a computer device (3) checks (302), via said computer network, the updating indications generated at the first digital address URL1,
- said computer device downloads (304) said digital content provided with information to said first data flow in case of an updating, said downloaded digital content being stored in the computer device (3),
**characterised in that** the method further includes the following steps:
- the computer device (3) records said first digital address URL1, said recording being performed further to the sending of a first request, including said first digital address URL1, by the mobile terminal to the computer device,
- the computer device checks (III,102) whether said first address URL1 of the first request corresponds to a content mentioned in a first database (31b), and
- if the checking is positive,
- the computer device sends (IV, 108, 204, 222) to the mobile terminal a second digital address URL2 of the computer device, so as to enable the downloading of said digital content downloaded by the mobile terminal through a mobile telecommunication network (4),
- the mobile terminal connects to said second digital address URL2, via the mobile telecommunication network, and downloads the updated digital content from the computer device,
- if the checking is negative, it records (104) said first address URL1 into a second database (31c) and acknowledges (106, 202) said first request with the mobile terminal.

2. A method according to claim 1, further including the following steps:
- said computer device (3) generates, at said second digital address URL2, a second data flow including indications of the updating of said digital content according to said first data flow,
- the mobile terminal (5) checks, via the mobile telecommunication network (4), the updating indications generated at said second digital address URL2, and
- the downloading by the mobile terminal (5) of said downloaded digital content as a function of the detection of the updating at the second digital address.

3. A method according to claim 2, wherein the data flows inform, each, the storage digital address URL1□, URL2□ of the corresponding digital content.

4. A method according to claim 3, wherein said data flows are markup files, the method including a step of converting (VII) said first data flow into said second data flow, said conversion including the removal and substitution of marks, as well as the modification of said first digital address URL1 into said second digital address.

5. A method according to any one of the preceding claims, further including a step of conversion (VII) of said digital content into a multimedia format compatible with that of said mobile terminal, said conversion being performed by said computer device (3) after the downloading of said content.

6. A method according to claim 5 depending on claim 4, wherein the conversion of said downloaded digital content is performed before the conversion of said first data flow.

7. A method according to any one of the preceding claims, including, further to the recording into said second database (31c), the following steps:
- the computer device (3) downloads (V, 206, 208) said digital content provided with information into the first data flow generated at the first address URL1,
- the computer device (3) converts (VII) said downloaded digital content and the first data flow into formats compatible with the mobile terminal (5), and
- when the conversions are completed, the digital device (3) sends (108, 222) said second digital address URL2 to said mobile terminal.

8. A method according to claim 7, wherein the sending of the second digital address is performed in answer to a subsequent request (IX, 154, 216, 220) from the mobile terminal.

9. A method according to claim 7, wherein the sending of the second digital address is performed as a push sending to said mobile terminal.

10. A method according to claim 1, wherein said second digital address is the storage address URL2D in the computer device (3) of said downloaded digital content.

11. A platform (3) for downloading to a mobile terminal (5) a digital content periodically updated and provided with information into a first dataflow including indications of the updating of said digital content, said first data flow being generated at a first digital address URL1 of a computer network (1), the platform including:
- means for recording (31), upon reception of a first request from a mobile terminal, said first digital address URL1, said recording means (31) including the first and second databases (31b, 31c), the first base (31c) storing said first digital address upon reception of the first request, when the first address is not recorded in the second database (31b),
- means for checking (32), via the computer network, the updating indications generated at said first digital address,
- means for downloading and storing (32) said digital content provided with information into said first data flow in case of an updating, and
- means for transmitting (32) to the mobile terminal a second digital address URL2 of the computer device used for carrying out the downloading of said digital content by the mobile terminal through a mobile telecommunication network.

12. A platform according to claim 11, wherein the downloading and storing means (32) are so arranged as to move said first address recorded in said first database (31c) to the second database (31b) when said digital content is downloaded and made available to said mobile terminal (5) on the mobile telecommunication network (4).

13. A platform according to claim 12, wherein the downloading and storing means include software means for converting said digital content and said first data flow into a digital content and a second data flow adapted to the format of said mobile terminal (5).

14. A system for downloading to a mobile terminal (5) a digital content periodically updated and provided with information into a first data flow comprising indications of the updating of said digital content, the system including:
- at least one computer server (2) generating said first data flow at a first digital address URL1
- a platform (3) according to any one of claims 11 to 13, and
- at least one mobile terminal (5) including means for making a connection with said second digital address URL2 and downloading said digital content from said computer device (3) on the mobile telecommunication network (4).

## Patentansprüche

1. Up- und Downloadverfahren eines digitalen Anhangs (5), der hin und wieder aktualisiert und in einen ersten Datenfluss eingespeist wird, der Angaben zur Aktualisierung des genannten digitalen Inhalts enthält, auf einem mobilen Terminal (5), wobei der genannte Datenfluss an einer ersten digitalen Adresse URL1 durch wenigstens einen IT-Server (2) eines IT-Netzes (1) generiert wird,
wobei das Verfahren die folgenden Stufen umfasst:
- eine IT-Vorrichtung (3) überprüft (302) über das genannte IT-Netz die Aktualisierungsangaben, die an der genannten digitalen Adresse URL 1 generiert werden,
- die genannte IT-Vorrichtung lädt (304) den genannten digitalen Inhalt herunter, der im Falle einer Aktualisierung in den ersten Datenfluss eingegeben wurde, wobei der genannte herunter geladene digitale Inhalt in der IT-Vorrichtung (3) gespeichert wird,
**dadurch gekennzeichnet, dass** das Verfahren darüber hinaus die folgenden Stufen umfasst:
- die IT-Vorrichtung (3) speichert die genannte erste digitale Adresse URL1, wobei die genannte Speicherung im Anschluss an den Versand einer ersten Anfrage realisiert wird, die die genannte digitale Adresse URL1 umfasst, durch das mobile Terminal an die IT-Vorrichtung.
- die IT-Vorrichtung überprüft (III, 102), ob die genannte erste Adresse URL1 der ersten Anfrage einem referenzierten Inhalt in einer ersten Datenbank (31b) entspricht und
- ob die Überprüfung positiv ist,
- die IT-Vorrichtung versendet (IV, 108, 204, 222) an das mobile Terminal eine zweite digitale Adresse URL2 von der IT-Vorrichtung derart, dass das Up- / Downloaden des genannten digitalen herunter geladenen Inhalts vom mobilen Terminal über ein Netz mobiler Telekommunikation (4) ermöglicht wird,
- das mobile Terminal stellt eine Verbindung mit der genannten zweiten digitalen Adresse URL2 über das Netz mobiler Telekommunikation her und lädt den genannten digitalen, aktualisierten Inhalt von der IT-Vorrichtung herunter,
- Wenn die Überprüfung negativ ist, speichert (104) es die genannte erste Adresse URL1 in einer zweiten Datenbank (31c) und quittiert (106, 202) die genannte erste Anfrage im mobilen Terminal.

2. Verfahren gemäß Anspruch 1, das darüber hinaus die folgenden Stufen umfasst:
- die genannte IT-Vorrichtung (3) generiert an der genannten zweiten digitalen Adresse URL2 einen zweiten Datenfluss, der Aktualisierungsangaben des genannten digitalen Inhalts in Abhängigkeit von dem genannten ersten Datenfluss umfasst,
- das mobile Terminal (5) überprüft über das mobile Telekommunikationsnetz (4) die Aktualisierungsangaben, die an der genannten zweiten digitalen Adresse URL2 generiert wurden und
- wobei das Up- / Downloaden des genannten herunter geladenen digitalen Inhalts durch das mobile Terminal (5) von der Feststellung einer Aktualisierung an der zweiten digitalen Adresse abhängt.

3. Verfahren gemäß Anspruch 2, in dem die Datenflüsse jeweils die digitale Adresse URL1', URL2' zur Speicherung des entsprechenden digitalen Inhalts einspeichern.

4. Verfahren gemäß Anspruch 3, in dem die genannten Datenflüsse Markierungsdateien sind, wobei das Verfahren eine Konvertierungsstufe (VII) des genannten ersten Datenflusses in dem genannten zweiten Datenfluss umfasst, wobei die genannte Konvertierung die Löschung und den Ersatz von Markierungen sowie die Änderung der ersten digitalen Adresse URL1 in die zweite digitale Adresse umfasst.

5. Verfahren gemäß einem der vorherigen Ansprüche, das darüber hinaus eine Konvertierungsstufe (VII) des genannten digitalen Inhalts in ein Multimediaformat umfasst, welches mit dem des genannten mobilen Terminals kompatibel ist, wobei die genannte Konvertierung durch die genannte IT-Vorrichtung (3) nach dem Up- / Downloaden des genannten Inhalts realisiert wurde.

6. Verfahren gemäß Anspruch 5 in Abhängigkeit von Anspruch 4, in dem die Konvertierung des genannten digitalen herunter geladenen Inhalts der Konvertierung des genannten ersten Datenflusses vorausgeht.

7. Verfahren gemäß einem der vorherigen Ansprüche, das im Anschluss an die Speicherung in der zweiten Datenbank (31c) die folgenden Stufen umfasst:
- die IT-Vorrichtung (3) lädt (V, 206, 208) den genannten digitalen Inhalt herunter, der in dem ersten Datenfluss eingespeist ist, welcher an der ersten Adresse URL1 generiert wird,
- die IT-Vorrichtung (3) konvertiert (VII) den genannten herunter geladenen digitalen Inhalt und den ersten Datenfluss in Formate, die mit dem mobilen Terminal (5) kompatibel sind, und
- nachdem die Konvertierungen durchgeführt sind, verschickt (108, 222) die IT-Vorrichtung (3) die genannte zweite digitale Adresse URL2 an das genannte mobile Terminal.

8. Verfahren gemäß Anspruch 7, in dem der Versand der zweiten digitalen Adresse als Antwort auf eine spätere Anfrage (IX, 154, 216, 220) des mobilen Terminals durchgeführt wird.

9. Verfahren gemäß Anspruch 7, in dem der Versand der zweiten digitalen Adresse in Form eines Zwangsversandes an das genannte mobile Terminal erfolgt.

10. Verfahren gemäß Anspruch 1, in dem die genannte zweite digitale Adresse die Speicheradresse URL2 auf der IT-Vorrichtung (3) des genannten herunter geladenen digitalen Inhalts ist.

11. Plattform (3) zum Up- / Downloaden eines digitalen Inhalts, der hin und wieder aktualisiert wird und in einen ersten, Aktualisierungsangaben des genannten digitalen Inhalts umfassenden Datenfluss eingespeist wird, auf einem mobilen Terminal (5), wobei der genannte erste Datenfluss an einer ersten digitalen Adresse URL1 eines IT-Netzes (1) generiert wird, wobei die Plattform Folgendes umfasst:
- Mittel zum Speichern (31) der genannten ersten digitalen Adresse URL1 bei Erhalt einer ersten Anfrage eines mobilen Terminals, wobei die genannten Mittel zum Speichern (31) eine erste und zweite Datenbank (31b, 31c) umfassen, wobei die erste Datenbank (31c) die genannte erste digitale Adresse bei Erhalt der ersten Anfrage speichert, wenn diese erste Adresse nicht in der zweiten Datenbank (31b) gespeichert ist,
- Mittel zur Überprüfung (32) der an der genannten ersten digitalen Adresse generierten Aktualisierungsangaben über das IT-Netz,
- Mittel zum Up- / Downloaden und Speichern (32) des genannten digitalen Inhalts in den genannten ersten Datenfluss im Falle einer Aktualisierung und
- Mittel zum Übertragen (32) einer zweiten digitalen Adresse URL2 von der IT-Vorrichtung, die zur Realisierung des Up- / Downloadens des genannten digitalen Inhalts durch das mobile Terminal über ein Netz mobiler Telekommunikation genutzt wird, auf das mobile Terminal.

12. Plattform gemäß Anspruch 11, in der die Mittel zum Up- / Downloaden und Speichern (32) angeordnet sind, um die genannte erste Adresse, die in der ersten Datenbank (31c) gespeichert ist, in die zweite Datenbank (31b) zu verschieben, wenn der genannte digitale Inhalt herunter geladen und dem genannten mobilen Terminal (5) in dem Netz zur mobilen Telekommunikation (4) zur Verfügung gestellt wurde.

13. Plattform gemäß Anspruch 12, in der die Mittel zum Up- / Downloaden und Speichern ein Softwaremittel zur Konvertierung des genannten digitalen Inhalts und des genannten ersten Datenflusses in einen angepassten digitalen Inhalt und einen zweiten Datenfluss umfassen, der an das Format des genannten mobilen Terminals (5) angepasst ist.

14. System zum Up- / Downloaden eines digitalen Inhaltes, der hin und wieder aktualisiert wird und in einen ersten Datenfluss eingespeist wird, der Aktualisierungsangaben des genannten digitalen Inhalts umfasst, auf ein mobiles Terminal (5), wobei das System Folgendes umfasst:
- wenigstens einen IT-Server (2), der den genannten ersten Datenfluss zu einer ersten digitalen Adresse URL1 generiert,
- eine Plattform (3) gemäß Anspruch 11 bis 13 und
- wenigstens ein mobiles Terminal (5), das Mittel zur Herstellung eines Anschlusses mit der genannten zweiten digitalen Adresse URL2 und zum Up- / Downloaden des genannten digitalen Inhalts von der genannten IT-Vorrichtung (3) in dem mobilen Telekommunikationsnetz (4) umfasst.
